# EUROPÄISCHE PATENTANMELDUNG

(11) **EP 2 036 691 A2**
(43) Veröffentlichungstag der Anmeldung: **18.03.2009**
(21) Anmeldenummer: 08103865.5
(22) Anmeldetag: 08.05.2008
(51) Int. Cl.: B27N 1/00, B27N 3/04

(54) **Verfahren zur Herstellung einer eigenstabilen Werkstoffplatte**

(30) Priorität: 25.04.2007 DE 102007019849
(71) Anmelder: Hock-Heyl, Carmen, 86720 Nördlingen (DE)
(72) Erfinder: Hock-Heyl, Carmen, 86720 Nördlingen (DE)
(74) Vertreter: Cremer, Ulrike Theresia

(57) **Zusammenfassung**

Die Erfindung betrifft ein Verfahren zur Herstellung einer eigenstabilen Werkstoffplatte aus gerösteten Faserpflanzen. Das Verfahren umfasst die folgenden Schritte:
a) Zerkleinern der gerösteten Faserpflanzen, wobei Schäben und Fasern im Wesentlichen in ihrem natürlichen Verbund bleiben, so dass Faserpflanzenstücke entstehen;
b) Beleimen der Faserpflanzenstücke;
c) Orientierungsloses Aufstreuen der Faserpflanzenstücke; und
d) Verpressen zu der Werkstoffplatte.

## Beschreibung

Die vorliegende Erfindung betrifft ein Verfahren zur Herstellung einer eigenstabilen Werkstoffplatte.

Zur Herstellung von eigenstabilen Werkstoffplatten wird gewöhnlich Holz verwendet. Bekannte Beispiele davon sind die sog. Spanplatten und OSB-Platten ("Oriented Strand Board"). OSB-Platten weisen gegenüber Spanplatten eine höhere Druckfestigkeit auf und sind deshalb auch für tragende Konstruktionszwecke geeignet.

Anstelle von Holz wird in der EP 0 998 379 B1 eine Strohbauplatte vorgestellt, wobei Stroh längs gespaltet, verleimt und zu Platten verpresst wird. Der Spaltvorgang wird als notwendig angesehen, um die gewünschte Festigkeit zu erzielen. Eine OSB-Platte aus Hanfschäben wird in der EP 1 181 138 B1 beschrieben. Die Platte wird aus Hanfschäben, d.h. dem holzigen Material der Hanfpflanze, hergestellt. Schäben erhält man nach Abtrennen der Bastfasern. Die Schäben werden zur Herstellung der Verbundplatten gespaltet und parallel ausgerichtet. Das Ausrichten und Spalten der Schäben wird als notwendig angesehen, um die gewünschte Festigkeit zu erhalten. Von diesem Gedanken aus geht die EP 0 404 679 B1 noch weiter. Der dort offenbarte Baustoff wird aus pflanzlichen Fasern, d. h. im Falle von Hanf das Material ohne Schäben, gebildet, welche parallel angeordnet und in sehr spezifisch ausgebildeten Paketen gruppiert wird. Die beiden letztgenannten Druckschriften verwenden nicht die gesamte Hanfpflanze, sondern lediglich einen Teil davon, nämlich Schäben (EP 1 181 138 B1) bzw. Fasern (EP 0 404 679 B1). Dies bedeutet, dass die Hanfpflanze vor der Weiterverarbeitung aufwändig aufbereitet werden muss. Einen anderen Weg gehen die DE 197 56 046 A1 und DE 197 18 352 A1. Beide versuchen Hanfverarbeitungsprodukte, z. B. Baustoffe bzw. Platten, durch die Nutzung der gesamten Hanfpflanze herzustellen. Beide offenbaren jedoch eine Art Silagevorgang, im Fall der DE 197 56 046 A1 durch die Plastifizierung von gehäckseltem Hanf in landwirtschaftlichen Silos und im Fall der DE 107 18 352 A1 durch das Pressen zu Ballen und Umhüllen mit Folie. Anzumerken ist weiterhin, dass eine Feldröste- bzw. überhaupt ein Röstvorgang bei diesen beiden Verfahren nicht erfolgt. Außerdem müssen die Pflanzenstücke vor der Verarbeitung zerfasert werden.

Die nachveröffentlichte europäische Patentanmeldung EP 1 780 243 A2 beschreibt Bindemittelzusammensetzungen für diverse Holzwerkstoffe.

Trotz der zahlreichen Ansätze, eine eigenstabile Werkstoffplatte aus Hanf bereitzustellen, sind derzeit keine solchen am Markt erhältlich. Versuche zeigten, dass die vorgeschlagenen Verfahren zu arbeitsintensiv sind, um eine kostengünstige, im Preis mit Holz-OSB-Platten vergleichbare, Werkstoffplatte herzustellen. Auch konnten die notwendigen Festigkeitswerte mit den vorgeschlagenen einfacheren Verfahren nicht erzielt werden.

Aufgabe der vorliegenden Erfindung ist daher, ein Verfahren bereitzustellen, mit welchem sich auf im Vergleich zum Stand der Technik einfache Weise kostengünstig eigenstabile Werkstoffplatten herstellen lassen. Bevorzugt sollen die eigenstabilen Werkstoffplatten eine solche Festigkeit aufweisen, dass sie auch für tragende Zwecke eingesetzt werden können.

Diese Aufgabe wird gelöst durch ein Verfahren nach Anspruch 1. Vorteilhafte Gestaltungen sind Gegenstand der Unteransprüche.

Bei dem erfindungsgemäßen Verfahren zur Herstellung einer eigenstabilen Werkstoffplatte werden geröstete Faserpflanzen verwendet. Eingesetzt werden folglich Faserpflanzen, die nach der Ernte einer Röste, auch als Rotte bekannt, ausgesetzt werden. Durch den Röstvorgang werden die Pektine im Pflanzenstängel auf- bzw. angelöst. Bekannt sind die sog. Tauröste, bei welcher die Pflanzenstängel auf dem Feld ausgelegt und der Witterung ausgesetzt werden, und die sog. Wasserröste, wobei die Pflanzen in Wasser eingelegt werden. Daneben ist z. B. auch die chemische Röste bekannt. Bekannte Faserpflanzen, die häufig einer Röste unterzogen werden, sind Flachs und Hanf. Entscheidend ist nun, dass die gerösteten Faserpflanzen zerkleinert werden, ohne dass eine Auftrennung in Schäben und Fasern erfolgt. Das heißt, Schäben und Fasern bleiben im Wesentlichen in ihrem natürlichen Verbund. Es werden nur Faserpflanzenstücke erzeugt. Mit dem Begriff "im Wesentlichen in ihrem natürlichen Verbund bleibend" wird ausgedrückt, dass keine gezielte Auftrennung der Faserpflanzen in Fasern und Schäben erfolgt, dass jedoch durch den Zerkleinerungsvorgang und auch durch die Röste selber eine gewisse Ablösung von Schäben und Fasern erfolgen kann. Anders jedoch als bei den oben zitierten Druckschriften, in welchen gezielt nur Fasern oder Schäben bzw. eine Mischung derselben eingesetzt wird, um Platten herzustellen, wird bei dem erfindungsgemäßen Verfahren eine solche Auftrennung gerade nicht durchgeführt, sondern die gerösteten Faserpflanzen werden nur zerkleinert. Bevorzugte Längenbereiche der erzeugten Faserpflanzenstücke bewegen sich in der Größenordnung von 10 bis 150 mm. Nach dem Zerkleinerungsvorgang werden die Faserpflanzenstücke beleimt. Entscheidend in dem Zusammenhang ist, dass, anders als in den oben beschriebenen Druckschriften, keine Längsspaltung des Pflanzenstängels durchgeführt wird, sondern der Hanfhäcksel ohne zusätzliche Spaltvorgänge beleimt wird. Wie bereits erwähnt, bleiben Schäben und Fasern im Wesentlichen in ihrem natürlichen Verbund, der durch eine Längsspaltung gestört wäre. Nach dem Beleimen der Pflanzenstücke werden sie orientierungslos aufgestreut und zu der erfindungsgemäßen Werkstoffplatte verpresst. Mit dem Begriff "orientierungslos" wird wiederum der Unterschied zum Stand der Technik deutlich. Die zitierten Druckschriften erachteten es als notwendig, die Pflanzenstücke zu orientieren, parallel oder sogar zu besonderen, dreidimensionalen Paketen, um bestimmte Festigkeitswerte zu erzielen. Ein großer Vorteil der vorliegenden Erfindung liegt darin, dass eine solche Orientierung nicht notwendig ist. Der erzeugte Pflanzenhäcksel, d. h. die durch den Zerkleinerungsvorgang erzeugten Faserpflanzenstücke werden ohne Ausrichtvorgang aufgestreut und verpresst. In diesem Zusammenhang unterscheidet die Erfindung sich auch erheblich von den bekannten Holz-OSB-Platten, da, wie der Name ausdrückt, die Holzspäne orientiert, d. h. ausgerichtet werden.

Gemäß einer bevorzugten Ausführung der Erfindung erfolgt das Zerkleinern der gerösteten Faserpflanzen dadurch, dass die Pflanzen nach dem Röstvorgang zu Ballen gepresst werden und der Ballen als Ganzes gehäckselt wird. Mit dieser bevorzugten Ausführungsform wird das Herstellungsverfahren noch weiter vereinfacht. Durch den Häckselvorgang wird ein verhältnismäßig inhomogenes Ausgangsmaterial, d. h. Faserpflanzenstücke, erzeugt. Da der Ballen als Ganzes gehäckselt wird, sind manche Pflanzenstücke verhältnismäßig lang und andere sehr kurz. Man würde erwarten, dass sich mit solch einem inhomogenen Ausgangsmaterial keine Platten mit ausreichender Festigkeit herstellen lassen. Überaschenderweise ist jedoch das Gegenteil der Fall. Die mit dem inhomogenen Häckselmaterial hergestellten Werkstoffplatten hatten in Versuchen ausgezeichnete Stabilitäts- und Festigkeitswerte.

Bei der vorliegenden Erfindung mussten etliche Vorurteile in der Fachwelt überwunden werden. Bis zur Erfindung wurde angenommen, dass Platten mit ausreichender Festigkeit nur hergestellt werden können, wenn eine möglichst vollständige Beleimung des

Pflanzenmaterials erfolgt. Aus diesem Grunde wurde das Pflanzenmaterial vor der Beleimung gespaltet. Durch den Spaltvorgang wurden die röhrenförmigen Halme zerteilt, damit das Bindemittel die Pflanzenstücke allseitig umgeben kann. Auch Hanf hat einen hohlen Stängel, so dass die Fachwelt erwartet hatte, dass auch beim Hanfstängel der Spaltvorgang unerlässlich ist. Es zeigte sich jedoch überraschend, dass durch den Einsatz von gerösteten Faserpflanzen und dem Belassen von Fasern und Schäben im natürlichen Verbund, trotz der an sich unvollständigen Beleimung, hervorragende Festigkeitswerte, sogar bessere als bei den bekannten Holz-OSB-Platten, bei geringerem Raumgewicht, erzielt werden konnten. Folglich musste ein Fachmann das Vorurteil überwinden, dass, aufgrund der unvollständigen Beleimung der Stücke in der Platte, Defektstellen nach dem Pressvorgang vorhanden sind, die Bruchstellen beim Einsatz der Platten darstellen könnten. Ein weiteres Vorurteil, das überwunden werden musste, ist der Grundsatz, dass das Ausgangsmaterial zur Herstellung von eigenstabilen Platten mit für die Praxis tauglichen Festigkeitswerten, möglichst homogen sein muss. Bei der bevorzugten Ausführung, bei welcher die Pflanzen zu Ballen gepresst und der Ballen als Ganzes gehäckselt wird, entsteht ein sehr inhomogenes Ausgangsmaterial, das sich ausgezeichnet zu den erfindungsgemäßen Werkstoffplatten verarbeiten lässt. Wie erwähnt, werden hervorragende Festigkeitswerte erzielt und das bei geringem Raumgewicht. Schließlich musste noch ein drittes Vorurteil überwunden werden, dass die Pflanzenstücke nicht orientiert, d. h. nicht ausgerichtet, werden müssen. Die Fachwelt ging bis jetzt davon aus, dass zur Erzielung von hohen Festigkeitswerten, so dass hergestellte Werkstoffplatten auch zu tragenden Zwecken eingesetzt werden können, eine Ausrichtung der Pflanzenstücke, z. B. im Fall von OSB-Platten der Holzspäne, unabdingbar ist. Ein Fachmann hätte in Anbetracht des durch den Zerkleinerungsvorgang entstehenden inhomogenen, ineinander verhedderten Ausgangsmaterials angenommen, dass unmöglich Werkstoffplatten mit ausreichender Stabilität hergestellt werden können. Im Ergebnis hatte die Erfinderingroße Vorurteile zu überwinden. In Anbetracht der geschilderten Problematiken hätte ein Fachmann gar nicht erst versucht, Werkstoffplatten nach dem genannten Verfahren aus Faserpflanzen herzustellen.

Nach einer weiteren bevorzugten Ausführung werden dem Ausgangsmaterial aus gerösteten Faserpflanzenstücken weitere nachwachsende Rohstoffe zugefügt. Beispiele hierfür sind Getreidestroh, Holz, Sonnenblumen, Kenaf, Miscanthus oder Brennnessel. Auch das Beimischen von Hanfbestandteilen, wie Fasern und/oder Schäben, ist möglich.

Die erzeugte selbsttragende Werkstoffplatte weist bevorzugt eine Rohdichte von 80 bis 500 kg/m³ auf. Mit dem Begriff "eigenstabile Werkstoffplatte" ist Plattenmaterial gemeint, das zu Bauzwecken verwendet werden kann. Sie sind, ähnlich wie Span- und OSB-Platten, auch als Grobspanplatten bekannt, für beliebige Bau- oder Konstruktionszwecke einsetzbar. Auch für die Verwendung als Putzträger, wie die bekannten Holzwolle-Leichtbauplatten, oder als Akustikplatte zur Schalldämpfung sind die Werkstoffplatten geeignet. Hervorzuheben ist auch, dass die hergestellten Werkstoffplatten eine optisch ansprechende Oberfläche haben. Die Färbung der Oberfläche kann z. B. über die Presstemperatur eingestellt werden. Je nach Presstemperatur überwiegen dabei die Grün- oder Brauntöne. Durch eine höhere Presstemperatur nimmt die Braunfärbung zu, die sogar ins leicht Schwärzliche gehen kann, wohingegen bei niedrigerer Presstemperatur Grüntöne überwiegen. Die optisch ansprechende Erscheinung kann bei der Verwendung der Platte genutzt werden, indem die Werkstoffplatten als Sichtelemente eingesetzt werden. Die Oberfläche kann dann beispielsweise geschliffen und beliebig lackiert, lasiert, gebeizt, gefärbt etc. werden.

## Patentansprüche

1. Verfahren zur Herstellung einer eigenstabilen Werkstoffplatte aus gerösteten Faserpflanzen, umfassend die folgenden Schritte:
a) Zerkleinern der gerösteten Faserpflanzen, wobei Schäben und Fasern im Wesentlichen in ihrem natürlichen Verbund bleiben, so dass Faserpflanzenstücke entstehen;
b) Beleimen der Faserpflanzenstücke;
c) Orientierungsloses Aufstreuen der Faserpflanzenstücke; und
d) Verpressen zu der Werkstoffplatte.

2. Verfahren nach Anspruch 1, wobei die geröstete Faserpflanze Hanf ist.

3. Verfahren nach Anspruch 1, wobei die geröstete Faserpflanze Flachs ist.

4. Verfahren nach Anspruch 1, wobei die gerösteten Faserpflanzen eine Mischung aus Hanf und Flachs sind.

5. Verfahren nach einem der vorstehenden Ansprüche, wobei das Zerkleinern der gerösteten Faserpflanzen **dadurch** erfolgt, dass geröstete Faserpflanzen in geröstetem Zustand zu Ballen gepresst werden und der Ballen als Ganzes gehäckselt wird.

6. Verfahren nach einem der vorstehenden Ansprüche, wobei zusätzlich zu den gerösteten Faserpflanzen zumindest ein weiterer nachwachsender Rohstoff beigefügt wird, insbesondere Getreidestroh, Holz, Sonnenblumen, Kenaf, Miscanthus oder Brennnessel.

7. Eigenstabile Werkstoffplatte aus gerösteten Faserpflanzen, die nach dem Verfahren nach einem der Ansprüche 1-6 hergestellt worden ist und die eine Rohdichte von 80-500 kg/m³ aufweist.
